# EUROPÄISCHE PATENTSCHRIFT

(11) **EP 2 560 345 B1**
(45) Veröffentlichungstag und Bekanntmachung des Hinweises auf die Patenterteilung: **21.02.2018**
(21) Anmeldenummer: 12186098.5
(22) Anmeldetag: 04.10.2011
(51) Int. Cl.: H04L 29/08, H04W 84/18, H04W 52/02, H04W 40/00, G01D 4/00, H04M 11/00, H04L 12/12, H04W 40/22, H04W 40/12

(54) **Verfahren und Vorrichtungsanordnung zur Übermittlung von Verbrauchsdaten dezentral angeordneter Datenerfassungsgeräte**
Method and device assembly for transferring consumption data from decentralised data recording devices
Procédé et agencement de dispositif destinés à la transmission de données de consommation d'appareils de détection de données agencés de manière décentralisée

(30) Priorität: 08.10.2010 DE 102010047946
(43) Veröffentlichungstag der Anmeldung: 20.02.2013
(62) Teilanmeldung aus: 11008022.3
(73) Patentinhaber: METRONA WÄRMEMESSER UNION GMBH, 81379 München (DE)
(72) Erfinder: Löhr, Karsten, 85435 Erding (DE); Hauenstein, Stefan, 85126 Münchsmünster (DE); Henkel, Gunter, 82152 Martinsried (DE); Heckmann, Dieter, 81476 München (DE)
(74) Vertreter: Prinz & Partner mbB

(56) Entgegenhaltungen:
- EP-A2- 1 765 027
- DE-A1- 10 133 366
- US-A1- 2009 316 682
- US-A1- 2010 115 302

## Beschreibung

Die Erfindung betrifft ein Verfahren zur Übermittlung von Verbrauchsdaten dezentral angeordneter Datenerfassungsgeräte an wenigstens einen Master-Netzknoten. Die Erfindung betrifft darüber hinaus eine Vorrichtungsanordnung zur Übermittlung von Verbrauchsdaten dezentral angeordneter Datenerfassungsgeräte an wenigstens einen Master-Netzknoten.

Im Rahmen der Funkauslesung von Verbrauchsdaten (Gas, Wasser, Wärme, Strom, etc.) müssen die von Datenerfassungsgeräten (Zähler, Heizkostenverteiler, etc.) erfassten Daten an einen Abrechnungsdienstleister übermittelt werden. Aus der EP 1 180 909 B1 ist ein Verfahren bekannt, bei dem die Verbrauchsdaten von einer Vielzahl dezentral angeordneter Datenerfassungsgeräte, die sich in einer oder mehreren Gebietsgruppen, z. B. auf verschiedenen Etagen einer Abrechnungseinheit (Wohnung, Liegenschaft) befinden können, über ein Netzwerk von Zwischenstationen (Datensammlern) zu einer zentralen Datensammelstelle transferiert werden. Von der zentralen Datensammelstelle können die Verbrauchsdaten dann vom Abrechnungsdienstleister gesammelt abgerufen werden. Jeder Zwischenstation werden bestimmte Datenerfassungsgeräte zugeordnet, insbesondere in Abhängigkeit der in einer Zwischenstation detektierten Empfangsleistung des jeweiligen Datenerfassungsgeräts. Innerhalb des Zwischenstationen-Netzwerks werden die Verbrauchsdaten adressiert und ungerichtet versendet, d. h. jede Zwischenstation, die sich innerhalb der Funkreichweite einer anderen Zwischenstation befindet, empfängt deren gespeicherte Verbrauchsdaten. Dadurch stehen die Verbrauchsdaten im Netzwerk nach einer gewissen Zeit allen Zwischenstationen zur Verfügung. Die Daten können somit von jeder Zwischenstation ausgelesen werden. Die Sendung der Daten innerhalb des Netzwerks erfolgt zu festgelegten Zeiten, die den Zwischenstationen bekannt sein müssen.

Nachteilig bei diesem bekannten Verfahren ist das sehr hohe Sendeaufkommen, das zwar für eine hohe Redundanz, aber auch für einen nicht unerheblichen Energieverbrauch sorgt. Das bekannte Verfahren ist deshalb nicht für batteriebetriebene Netze geeignet. Außerdem ist das Ausleseverfahren aufgrund der festen Zeitvorgaben für die Sendung der Daten im Netzwerk nicht flexibel einsetzbar.

In der EP 1 750 475 A2 ist ein Datenübertragungsnetzwerk mit primären Datensendern beschrieben, die dazu eingerichtet sind, in bestimmten Sendezeitintervallen entsprechend der Zeitvorgabe durch eine jeweilige eigene Zeitbasis Daten einschließlich Kennungsinformationen zu ihrer Identifizierung zu senden. Primäre Datenempfänger im Netzwerk sind jeweils primären Datensendern zum Empfang der gesendeten Daten zugeordnet und jeweils in bestimmten Empfangszeitintervallen, die mit den Sendezeitintervallen der ihnen zugeordneten primären Datensender zusammenfallen sollen, empfangsbereit geschaltet. Die primären Datenempfänger senden von den primären Datensendern empfangene Daten bzw. daraus abgeleitete Daten an wenigstens eine weitere Komponente des Datenübertragungsnetzes weiter, um sie unmittelbar durch diese weitere Netzkomponente oder ggf. im Wege der Übermittlung durch zusätzliche Netzkomponenten einer zentralen Datensammelstation zuzuführen. Das Empfangszeitschema eines jeweiligen primären Datenempfängers und dessen Zuordnung zu Datensendern sind durch Empfangsanforderungsinformationen von einer zur Empfangsanforderung autorisierten Netzkomponente änderbar.

Die EP 1 860 830 A1 beschreibt die Installation eines hierarchischen Netzwerkes mit mehreren Sensorknoten, welche Sensormesswerte direkt oder indirekt über Sensorknoten an einen zentralen Netzknoten kommunizieren. Die Sensorknoten werden nacheinander in Betrieb genommen, wobei ein Sensorknoten bei Inbetriebnahme eine anfängliche hierarchische Ebene aufweist und Synchronisations-Informationen gespeichert hat, um mit den in seinem Empfangsgebiet befindlichen Sensorknoten kommunizieren zu können. Ein Sensorknoten bildet temporär einen zentralen Netzknoten. Bei einer Kommunikation zwischen zwei Sensorknoten oder einem Sensorknoten und einem zentralen Netzknoten wird ein Synchronisationstelegramm ausgesendet, mit welchem die hierarchische Ebene des sendenden Knotens an den empfangenden Knoten mitgeteilt wird. Nach einer Kommunikation ändert einer der Sensorknoten seine hierarchische Ebene in Abhängigkeit der hierarchischen Ebene des anderen Sensorknotens.

Nachteilig bei den aus der EP 1 750 475 A2 und der EP 1 860 830 A1 bekannten Netzwerken ist der nicht unerhebliche Aufwand, Sendezeitintervalle und Empfangszeitintervalle der Netzkomponenten aufeinander abzustimmen.

Ein Verfahren und eine Vorrichtungsanordnung mit den Merkmalen der Oberbegriffe der Ansprüche 1 bzw. 10 sind aus der US 2009/0316682 A1 bekannt. Darin ist allgemein ein Ad-hoc-Netzwerk mit Datenerfassungsgeräten beschrieben, deren Daten von Datensammlern ausgelesen und an einen Master übertragen werden, wobei eine bidirektionale Kommunikation zwischen den einzelnen Netzknoten vorgesehen ist. Die Datensammler weisen neben der eigentlichen Sende-/Empfangseinheit zusätzlich einen sogenannten "wake-Up Transceiver" auf, um speziell bei Batteriebetrieb Strom zu sparen. Die Sende-/Empfangseinheit der Datensammler befindet sich normalerweise in einem Schlaf- oder Standby-Modus und wird vom wake-up transceiver aufgeweckt, wenn dieser ein entsprechendes Signal empfängt. Es wird zudem eine besondere Variante vorgeschlagen, gemäß der der Datensammler nur einen wake-up transceiver enthält, das heißt es ist außer dem wake-up transceiver keine weitere Sende-/Empfangseinheit vorhanden. Diese Variante ist für Fälle geringer Datenmengen vorgesehen, insbesondere bei Übertragung unverschlüsselter Daten.

Die US 2010/0115302 A1 beschreibt ein Aufweckverfahren für ein Gerät, das eine auf dem ZigBee-Funknetz-Standard basierende Empfangseinrichtung aufweist. Befindet sich die Empfangseinrichtung in einem Schlafmodus, wird geprüft, ob ein Schlaf-Timer abgelaufen ist oder ein externer Interrupt vorliegt. Ist eine von beiden Bedingungen erfüllt, wird die Medium Access Control (MAC) Verarbeitungseinheit des Geräts mit Strom versorgt, und es wird ein Wake-Up-Paket empfangen.

Aufgabe der Erfindung ist es, eine stromsparende, effiziente Möglichkeit zur Funkübertragung von Verbrauchsdaten zu schaffen, die ein hohes Maß an Flexibilität hinsichtlich der Datenübertragungswege und der zeitlichen Nutzung bietet.

Gelöst wird diese Aufgabe durch ein Verfahren zur Übermittlung von Verbrauchsdaten dezentral angeordneter Datenerfassungsgeräte mit den Merkmalen des Anspruchs 1 sowie durch eine Vorrichtungsanordnung zur Übermittlung von Verbrauchsdaten dezentral angeordneter Datenerfassungsgeräte mit den Merkmalen des Anspruchs 10. Vorteilhafte und zweckmäßige Ausgestaltungen der erfindungsgemäßen Verfahren bzw. der erfindungsgemäßen Vorrichtungsanordnung sind in den zugehörigen Unteransprüchen angegeben.

Beim erfindungsgemäßen Verfahren zur Übermittlung von Verbrauchsdaten dezentral angeordneter Datenerfassungsgeräte an wenigstens einen Master-Netzknoten über ein Netzwerk von Netzknoten basiert die Kommunikation zwischen den Netzknoten beim Übermitteln der Verbrauchsdaten auf einem Wake-On-Radio-Konzept, gemäß dem die Empfangseinrichtung eines Netzknotens in bestimmten Zeitabständen von einem Stromsparmodus in einen Empfangsmodus wechselt, in dem die Empfangseinrichtung für eine bestimmte Zeit auf einem bestimmten Funkkanal zuhört. Der Master-Netzknoten holt Informationen über Kommunikationsverbindungen zwischen einzelnen Netzknoten ein, welche auf Befehl des Master-Netzknotens von den einzelnen Netzknoten ermittelt werden.

Die Netzknoten, vorzugsweise auch der Master-Netzknoten, können in einem Primärfunkbetrieb die Verbrauchsdaten von den Datenerfassungsgeräten empfangen und in einem davon unabhängigen Sekundärfunkbetrieb die Verbrauchsdaten innerhalb des Netzwerks auf bidirektionalen Kommunikationswegen an den Master-Netzknoten übermitteln, wobei sich Frequenzband, Modulationsart und/oder Datenrate im Primärfunkbetrieb und im Sekundärfunkbetrieb unterscheiden.

Die Verbrauchsdaten aus den Netzknoten können unter Verwendung vorher festgelegter Pfade zwischen den Netzknoten und dem Master-Netzknoten ausgelesen werden.

Die zwischengespeicherten Verbrauchsdaten von allen Netzknoten, die auf dem Pfad zum Master-Netzknoten liegen, können, beginnend beim letzten Netzknoten eines Pfades, an den Master-Netzknoten weitergeleitet werden. Die Übermittlung der Verbrauchsdaten wird vorzugsweise mit dem am weitesten entfernten, noch nicht abgefragten Netzknoten fortgesetzt.

Bei jeder Übermittlung von Verbrauchsdaten von einem Netzknoten zu einem anderen Netzknoten kann die zugehörige Pfadangabe mitversandt werden.

Eine erfolgreiche Übermittlung eines Verbrauchsdatenpakets aus einem Pfad an den Master-Netzknoten kann für alle Netzknoten des Pfads vermerkt werden, wobei die Netzknoten des Pfads im Rahmen der Übermittlung nicht mehr abgefragt werden.

Die Pfade können dynamisch angepasst werden.

Ein Netzknoten kann die von einem Datenerfassungsgerät und/oder einem anderen Netzknoten empfangenen Verbrauchsdaten darauf prüfen, ob diese schon vorhanden sind, wobei vorzugsweise die Kriterien Empfangsqualität und/oder Aktualität der Daten in die Prüfung einbezogen werden.

Auch die Kommunikation zwischen den Datenerfassungsgeräten und den Netzknoten kann bei einem Übertragen der Verbrauchsdaten von den Datenerfassungsgeräten zu den Netzknoten auf dem Wake-On-Radio-Konzept basieren.

Bei der Kommunikation können alle Netzknoten und gegebenenfalls alle Datenerfassungsgeräte im Netzwerk über einen Identifikationscode, insbesondere deren Produktions- oder Gerätenummern, selektiert werden.

Die erfindungsgemäße Vorrichtungsanordnung zur Übermittlung von Verbrauchsdaten dezentral angeordneter Datenerfassungsgeräte an einen Master-Netzknoten gemäß dem oben beschriebenen Verfahren umfasst mehrere Netzknoten mit Sende- und Empfangseinrichtungen, die so angeordnet sind, dass sich jeder Netzknoten wenigstens in Empfangsreichweite eines anderen Netzknotens befindet und sich wenigstens ein Netzknoten zusätzlich in Empfangsreichweite des Master-Netzknotens befindet. Die Netzknoten verfügen über eine Wake-On-Radio-Funktionalität, gemäß der die Empfangseinrichtung eines Netzknotens in bestimmten Zeitabständen von einem Stromsparmodus in einen Empfangsmodus wechselt, in dem die Empfangseinrichtung für eine bestimmte Zeit auf einem bestimmten Funkkanal zuhört. Der Master-Netzknoten ist dazu eingerichtet, Informationen über Kommunikationsverbindungen zwischen einzelnen Netzknoten, welche auf Befehl des Master-Netzknotens von den einzelnen Netzknoten ermittelt werden, einzuholen.

Die Netzknoten können in einem Primärfunkbetrieb, in dem die Verbrauchsdaten von den Datenerfassungsgeräten empfangen werden, und in einem davon unabhängigen Sekundärfunkbetrieb betreibbar sein, in dem die Verbrauchsdaten auf bidirektionalen Kommunikationswegen an den Master-Netzknoten übermittelt werden, wobei sich Frequenzband, Modulationsart und/oder Datenrate im Primärfunkbetrieb und im Sekundärfunkbetrieb unterscheiden.

Auch die Datenerfassungsgeräte können als weitere Netzknoten in das Netzwerk einbezogen sein und ebenfalls über die Wake-On-Radio-Funktionalität verfügen.

Die Netzknoten und gegebenenfalls die Datenerfassungsgeräte können so eingerichtet sein, dass sie vor und/oder nach einer Übermittlung der Verbrauchsdaten an den Master-Netzknoten in einen Wake-On-Radio-Modus wechseln.

Das Wake-On-Radio-Konzept bzw. die Wake-On-Radio-Funktionalität erlaubt einen äußerst stromsparenden Betrieb bei der Netzwerkkonfiguration und bei der Übermittlung der Verbrauchsdaten an den Master-Netzknoten. Aufgrund der quasi-permanenten Empfangsbereitschaft der Netzknoten gibt es keine zeitliche Einschränkung bei der Netzwerkkonfiguration bzw. bei der Verbrauchsdatenübermittlung. Außerdem ist ein (Fern-)Zugriff auf das Netzwerk jederzeit möglich, auch im Rahmen einer Fernwartung des Netzwerks.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine Darstellung vernetzter Netzknoten;
- Figur 2 eine Matrix aller Wege;
- Figur 3 eine Matrix inaktiver Wege;
- Figur 4 ein Pfadsuchbeispiel in zwei Schritten;
- Figur 5 einen ermittelten Pfad; und
- Figur 6 einen umgekehrten Pfad.

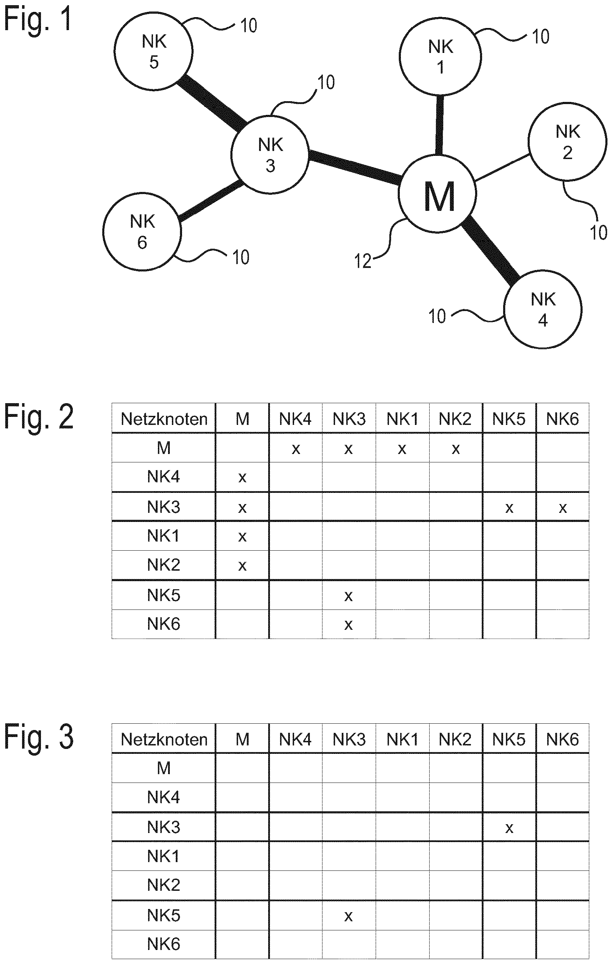

In Figur 1 sind mehrere Netzknoten 10 und ein Master-Netzknoten 12 (nachfolgend kurz: Master) dargestellt, die miteinander vernetzt sind. Gemäß einer bevorzugten Anwendung der Erfindung handelt es sich bei den Netzknoten 10 um Datensammler und beim Master 12 um einen Master-Datensammler, ohne dass die Erfindung hierauf eingeschränkt wäre. Die Netzknoten 10 und auch der Master 12 sind dafür eingerichtet, Verbrauchsdaten zu empfangen, die von dezentral angeordneten Datenerfassungsgeräten (nicht dargestellt) ausgesendet werden. Die Datenerfassungsgeräte können insbesondere Strom-, Gas-, Wasser- Wärmezähler oder an Heizkörpern angebrachte Heizkostenverteiler sein und im Hinblick auf ihre Netzabschluss-Anbindung an das Netzwerk allgemein auch als Endgeräte bezeichnet werden.

Die Übertragung der Verbrauchsdaten von den Datenerfassungsgeräten zu den Netzknoten 10, 12 ist in der Regel unidirektional und wird als Primärfunk bezeichnet. Zur Realisierung von weitergehenden Funktionen können die Datenerfassungsgeräte zusätzlich mit Empfangsmodulen ausgestattet sein. In diesem Fall ist eine bidirektionale Kommunikation mit den Netzknoten 10, 12 möglich.

Sowohl die Datenerfassungsgeräte als auch die Netzknoten 10 sind batteriebetrieben. Der Master 12 ist ebenfalls batteriebetrieben, kann alternativ aber auch an das Stromnetz angeschlossen sein.

In jedem Netzknoten 10, 12 (einschließlich dem Master) ist dessen Produktionsnummer oder ein anderer eindeutiger Identifikationscode hinterlegt. Die Netzknoten 10 und der Master 12 weisen Sende- und Empfangsmodule (kurz: Sender und Empfänger) auf und sind zur bidirektionalen, drahtlosen Kommunikation untereinander eingerichtet.

Der Master 12 verfügt im Wesentlichen über die gleichen Komponenten und hat den gleichen Aufbau wie die anderen Netzknoten 10 im Netzwerk. Somit kann bei einer vorhandenen Anordnung von Netzknoten nach freiem Ermessen bestimmt werden, welcher Netzknoten 10 als Master 12 fungieren soll. Bei Bedarf kann nachträglich auch ein anderer Netzknoten 10 zum Master 12 umkonfiguriert werden. Grundsätzlich können auch mehrere Master 12 in einem Netzwerk vorgesehen sein.

Die Netzknoten 10 und der Master 12 können in wenigstens zwei Betriebsarten betrieben werden: im bereits erwähnten Primärfunkbetrieb und in einem Sekundärfunkbetrieb. Im Primärfunkbetrieb empfangen die Netzknoten 10 und der Master 12 Verbrauchsdaten der Datenerfassungsgeräte. Im Sekundärfunkbetrieb werden die Verbrauchsdaten innerhalb des Netzwerks auf bidirektionalen Kommunikationswegen zum Master 12 transferiert.

Aufgrund der Trennung in Primärfunkbetrieb und Sekundärfunkbetrieb können sich Frequenzband, Modulationsart und/oder Datenrate in den beiden Betriebsarten unterscheiden, was eine gezielte Abstimmung auf die speziellen Anforderungen der jeweiligen Betriebsart ermöglicht. Insbesondere im Sekundärfunkbetrieb ist eine hohe Übertragungsrate vorteilhaft, um die Sendedauer und damit den Stromverbrauch beim Senden gering zu halten.

Im Sekundärfunkbetrieb befinden sich die Netzknoten 10 die meiste Zeit in einem Wake-On-Radio-Modus, der nachfolgend allgemein erläutert wird. Im Wake-On-Radio-Modus wechselt der Empfänger eines Netzknotens 10 in regelmäßigen, vorbestimmbaren Zeitabständen von einem Stromsparmodus in einen Empfangsmodus (Wake-Up-Intervall) und hört für eine vorbestimmbare Zeit auf einem vorbestimmbaren Funkkanal zu.

Zu Beginn eines Wake-Up-Intervalls führt der Empfänger eine sogenannte RSSI-Messung durch, um grundsätzlich zu entscheiden ob ein Signal vorhanden ist, das über einer vorbestimmbaren Signalstärkeschwelle liegt (RSSI steht für Received Signal Strength Indication und stellt einen Indikator für die Empfangsfeldstärke kabelloser Kommunikationsanwendungen dar. Der RSSI-Wert ist ein Ein-Byte-Wert, rangiert also zwischen 0 und 255, je höher umso besser die Signalstärke). Ist ein ausreichend starkes Signal vorhanden, so wird für eine konfigurier-bare Zeit auf ein Wake-Up-Paket gewartet. Ein Wake-Up-Paket geht einer Botschaft voraus und weist eine definierte Präambel und ein definiertes Synchronisationswort auf, die vom Empfänger erkannt und verarbeitet werden können.

Das Wake-Up-Paket wird vom Sender für eine definierbare Zeit wiederholt ausgesandt (Wake-Up-Sequenz), um den angesprochenen Netzknoten 10 bzw. dessen Empfänger zu wecken. Wird ein Wake-Up-Paket empfangen, so wird es bearbeitet, falls es für diesen Netzknoten 10 bestimmt ist. Ansonsten schaltet der Empfänger wieder zurück in den Wake-On-Radio-Modus, ebenso wie in dem Fall, wenn kein oder ein zu schwaches Signal empfangen wird.

Anhand des Wake-Up-Paketes erkennt der Empfänger auch, wie lange noch weitere Wake-Up-Pakete gesendet werden. In dieser Zeit kann der Empfänger in den Stromsparmodus wechseln. Nach Beendigung der Wake-Up-Sequenz wechselt der Empfänger dann für eine definierbare Zeit in den Empfangsmodus, um die eigentliche Botschaft zu empfangen.

Vor der Nutzung wird das Netzwerk konfiguriert. Grundsätzlich kann die Netzwerkkonfiguration einmalig, in regelmäßigen Abständen oder vor jedem Sekundärfunkbetrieb erfolgen, oder sie kann zu einem beliebigen Zeitpunkt angestoßen werden, auch über einen Fernzugriff.

Während der Netzwerkkonfiguration werden bidirektionale Kommunikationsverbindungen zwischen den Netzknoten 10, 12 ermittelt, die später im Sekundärfunkbetrieb zur Übertragung der Verbrauchsdaten von den Netzknoten 10 zum Master 12 genutzt werden. Voraussetzung für die Konfiguration des Netzwerks ist, dass die Netzknoten 10, 12 so angeordnet sind, dass sich jeder Netzknoten 10, 12 wenigstens in Empfangsreichweite eines anderen Netzknotens 10, 12 befindet und sich wenigstens ein Netzknoten 10 zusätzlich in Empfangsreichweite des Masters 12 befindet.

Zu Beginn der Netzwerkkonfiguration sendet der Master 12 einen Befehl der Art "Ermittle deine Nachbarn und teile dem Master deine Empfangsliste mit" in das Netzwerk aus. Der Befehl pflanzt sich bis zum letzten erreichbaren Netzknoten 10 fort. Jeder Netzknoten 10, 12 (auch der Master) ermittelt daraufhin die von ihm direkt empfangbaren Nachbarn und die Empfangsqualität der zugehörigen Verbindung. Zu diesem Zweck senden die Netzknoten 10, 12 periodisch Verbindungspakete aus. Während desselben Zeitraums ermöglicht ein Empfangsbetrieb der Netzknoten 10, 12, auf die Verbindungspakete von Nachbar-Netzknoten 10, 12 zu reagieren.

Im Beispiel der Figur 1, in der unterschiedliche Strichstärken unterschiedlichen Empfangsqualitäten entsprechen, kann etwa der Master 12 die Netzknoten NK1 bis NK4 empfangen, wobei die Verbindung zum Netzknoten NK4 am besten und die zum Netzknoten NK2 am schlechtesten ist. Jeder Netzknoten 10 erstellt eine Empfangsliste in der Reihenfolge der Empfangsqualität, in die die Identifikationscodes der empfangbaren Nachbar-Netzknoten 10, 12 und optional die zugehörige Empfangsqualität als RSSI-Wert eingetragen wird.

Der Master 12 erstellt im Laufe der Konfiguration eine "Matrix aller Wege" (siehe Figur 2), in welche Informationen über Kommunikationsverbindungen zwischen den einzelnen Netzknoten 10, 12 eingetragen werden (Verbindung ja/nein, optional die Empfangsqualität als RSSI-Wert). Jeder Netzknoten 10, 12 erhält eine Zeile und eine Spalte, sodass die Matrix aller Wege am Ende der Konfiguration n Zeilen und n Spalten hat, wobei n die Gesamtanzahl der Netzknoten 10, 12 im Netzwerk (einschließlich Master) angibt.

Parallel zur Matrix aller Wege wird eine "Matrix inaktiver Wege" gehalten (siehe Figur 3), die die gleiche Dimension (n x n) wie die der Matrix aller Wege hat und deren Bedeutung später noch erläutert wird.

Bei der Erstellung der Matrix aller Wege vergibt der Master 12, der selbst immer die Zeile 0 und die Spalte 0 innehat, zuerst für jeden seiner direkt empfangbaren Nachbar-Netzknoten 10 eine Zeile und eine Spalte - sortiert nach der Empfangsqualität - und trägt die Verbindungen bzw. deren Qualität in die Matrix aller Wege ein. Gemäß dem Beispiel der Figur 1 besteht die beste Verbindung des Masters 12 zum Netzknoten NK4, sodass der Netzknoten NK4 dem Master 12 direkt nachfolgend in die Matrix einsortiert wird. Die zweitbeste Verbindung besteht zum Netzknoten NK3, sodass dieser direkt nachfolgend einsortiert wird usw.

Danach beginnt der Master 12, in der Reihenfolge der Empfangsqualität die Nachbar-Netzknoten 10, genauer gesagt deren Empfangslisten auszulesen und trägt die daraus bekannten Verbindungen ebenfalls in die Matrix aller Wege ein. Dies geschieht mit möglichst minimalem Speicherbedarf für Verbindungsqualität und Pfadinformation. Hat der Master 12 alle erreichbaren Netzknoten 10 im Netzwerk ausgelesen, enthält die Matrix aller Wege alle Verbindungen der Netzknoten 10, 12 untereinander, d. h. die komplette Netztopologie ist bekannt.

Wird in der Matrix aller Wege nur die Information gespeichert, ob eine Verbindung zwischen zwei Netzknoten 10, 12 besteht, so ist dafür jeweils nur ein Bit nötig. Allgemein ist der Speicherbedarf der Matrix proportional zur Anzahl der Netzknoten im Netzwerk und der gespeicherten Übertragungsqualitäts- und Pfadinformation.

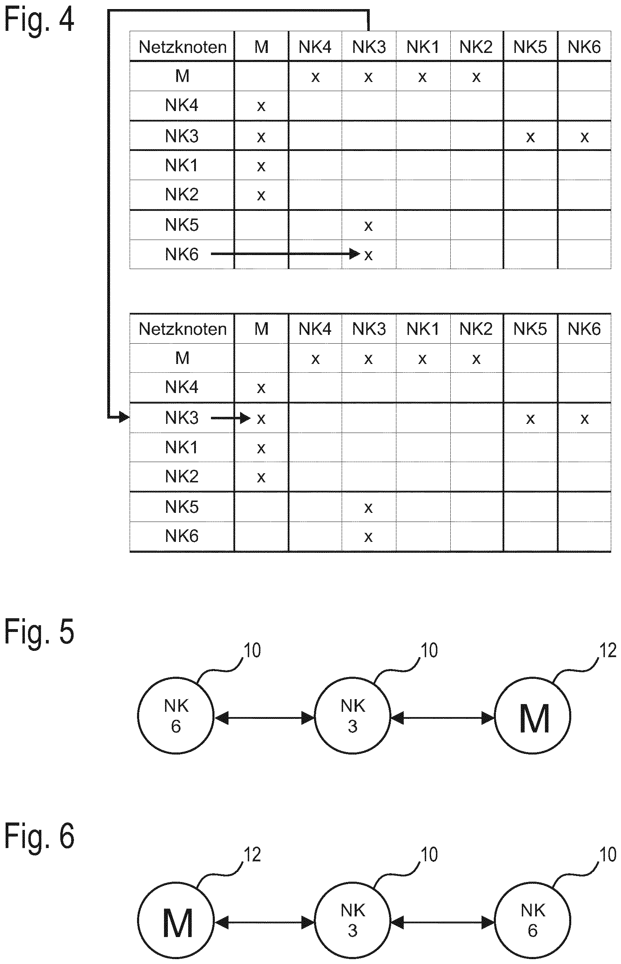

Für jeden Netzknoten 10 im Netzwerk wird nun mithilfe der Matrix aller Wege ein bevorzugter Pfad zum Master 12 ermittelt (Routing). Startpunkt jeder Pfadermittlung ist der Ziel-Netzknoten 10, d. h. der Netzknoten 10, der abgefragt werden soll. In der Matrix aller Wege wird zunächst nach dem ersten gesetzten Eintrag in der Zeile und/oder Spalte des Ziel-Netzknotens 10 gesucht, wie in Figur 4 oben am Beispiel des Ziel-Netzknotens NK6 gezeigt (hier: Zeilensuche). Wird in dieser Zeile und/oder Spalte kein Eintrag gefunden, so besteht zum Ziel-Netzknoten im Netzwerk keine Verbindung. Wird ein Eintrag in der Zeile und/oder Spalte gefunden, so wird der zugehörige Netzknoten 10 als Wegpunkt des Pfads gespeichert. Im Beispiel der Figur 4 ist dies der Netzknoten NK3.

Die Suche wird in der Zeile und/oder Spalte des zuvor ermittelten Netzknotens 10 fortgesetzt, wie in Figur 4 unten gezeigt. Dieser Vorgang wird so oft wiederholt, bis die Spalte bzw. Zeile des Masters 12 erreicht wird, was dem Ziel des gesuchten Pfads entspricht. Alle gespeicherten Netzknoten 10 ergeben zusammen dann den gesuchten Pfad, wie in Figur 5 gezeigt. Da alle späteren Ausleseanfragen (Requests) vom Master 12 ausgehen, wird der Pfad in umgekehrter Form gespeichert, wie in Figur 6 gezeigt, sodass jeder Pfad beim Master 12 beginnt. Während der Pfadsuche wird der ermittelte Pfad plausibilisiert, und das Routing von Schleifen wird vermieden.

Die im Master 12 parallel zur Matrix aller Wege gehaltene Matrix inaktiver Wege (Figur 3) dient zur Kontrolle der Kommunikationsverbindungen zwischen den Netzknoten 10, 12. Im Falle einer festgestellten fehlerhaften Verbindung zwischen zwei Netzknoten 10, 12 im Netzwerk wird ein Eintrag in die Matrix inaktiver Wege vorgenommen, der eine gestörte Verbindung kennzeichnet. Im Beispiel der Figur 3 wurde ein Fehler in der Kommunikationsverbindung zwischen den Netzknoten NK3 und NK5 festgestellt.

Während der Pfadermittlung werden die Einträge der Matrix inaktiver Wege mit denen der Matrix aller Wege verglichen und bei Übereinstimmung in der Matrix aller Wege ausgeblendet. Die so in der Matrix aller Wege gelöschten Verbindungen stehen dann für die Pfadermittlung nicht mehr zur Verfügung, und es wird gegebenenfalls nach Alternativpfaden gesucht.

Am Ende der Konfiguration sind im Master 12 bevorzugte Pfade zu allen Netzknoten 10 des Netzwerks hinterlegt. Optional verteilt der Master 12 die Routing-Informationen an alle Netzknoten 10 des Netzwerks, damit diese den Netzwerkaufbau kennen.

Die gesamte Konfiguration des Netzwerks erfordert keine Synchronisation. Wie bereits erwähnt kann die Konfiguration (oder Teile davon) dynamisch wiederholt werden, um Veränderungen im Netzwerk wie Störungen von Verbindungen, Wegfall bzw. Hinzukommen von Netzknoten 10, 12 etc. Rechnung zu tragen und die Aktualität der Pfade sicherzustellen.

Nachfolgend wird der Ablauf einer Übermittlung der Verbrauchsdaten von den Datenerfassungsgeräten über das Netzwerk zum Master 12 beschrieben. Im Primärfunkbetrieb werden die Verbrauchsdaten von den Datenerfassungsgeräten zeitgesteuert als Funktelegramme ausgesendet (z. B. jeden x. Tag eines Monats) und von den Netzknoten 10, 12 (einschließlich dem Master) empfangen. Eine feste Zuordnung der Datenerfassungsgeräte zu bestimmten Netzknoten 10, 12 ist dabei nicht vorgesehen, grundsätzlich aber möglich.

Zur Vermeidung von Auslöschungen durch Überlappung mit Funktelegrammen anderer Datenerfassungsgeräte können die Verbrauchsdaten mehrmals nacheinander (z. B. mehrfach über den Tag x verteilt) ausgesendet werden. Die Netzknoten 10, 12 befinden sich über einen mit dem bzw. den festgelegten Aussendezeitpunkt(en) korrelierenden Zeitraum im Empfangsmodus. In den Netzknoten 10, 12 werden die empfangenen Verbrauchsdaten zusammen mit der Gerätenummer oder einem anderen eindeutigen Identifikationscode des zugehörigen Datenerfassungsgeräts gespeichert.

Abhängig oder unabhängig vom Zeitpunkt der Übertragung der Verbrauchsdaten an die Netzknoten 10, 12 kann der Master 12 eine Übermittlung der Verbrauchsdaten anfordern, womit der Sekundärfunkbetrieb gestartet wird. Alle Netzknoten 10 befinden sich während des Sekundärfunkbetriebs im Wake-On-Radio-Modus.

Die Verbrauchsdaten werden aus den Netzknoten 10 unter Verwendung der bei der Netzwerkkonfiguration festgelegten Pfade ausgelesen, indem - beginnend beim letzten Netzknoten 10 eines Pfads - die zwischengespeicherten Verbrauchsdaten von allen Netzknoten 10, die auf dem Pfad zum Master 12 liegen, an den Master 12 weitergeleitet werden. Dies hat den Vorteil, dass nicht jeder einzelne Netzknoten 10 explizit vom Master 12 ausgelesen werden muss.

Die Ausleseprozedur sieht vor, dass ein Netzknoten 10, der Verbrauchsdaten von einem auf dem Pfad hinter ihm (d. h. in logischer Hinsicht weiter entfernt vom Master 12) liegenden Netzknoten 10 erhält, diese Verbrauchsdaten zwischenspeichert. Der Netzknoten 10 prüft die empfangenen Verbrauchsdaten darauf, ob sie schon vorhanden sind. Falls ja, verwirft er sie. In diese Filterprozedur werden Kriterien wie Empfangsqualität (RSSI-Wert), Aktualität der Daten, etc. einbezogen. Durch die Filterung wird ausgeschlossen, dass Verbrauchsdaten in einem Pfad doppelt übertragen werden.

Anhand der mit jeder Botschaft mitversandten Pfadangabe (Identifikationscodes aller Netzknoten 10, 12 des Pfads) weiß ein Netzknoten 10, dass und wohin er empfangene Verbrauchsdaten weiterleiten muss. Er filtert die empfangenen Daten und leitet die gefilterten Daten sowie die in seinem eigenen Speicher abgelegten Verbrauchsdaten an seinen nächsten Nachbarn im Pfad in Richtung Master 12 weiter. Aufgrund der Pfadangabe können grundsätzlich Botschaften von mehreren Mastern 12 verarbeitet werden, da keine feste Beziehung zwischen den Netzknoten 10 und einem bestimmten Master 12 besteht.

Erhält der Master 12 aus einem Pfad ein fehlerfreies Verbrauchsdatenpaket, so wird für alle Netzknoten 10 dieses Pfades vermerkt, dass der Datentransfer erfolgreich war. Der Master 12 weiß dann, dass die Netzknoten 10 dieses Pfades nicht mehr abgefragt werden müssen.

Die Abfrage wird mit dem am weitesten entfernten, noch nicht abgefragten Netzknoten 10 fortgesetzt. Grundsätzlich wird immer versucht, Pfade maximaler Länge zu verwenden und abzufragen, um möglichst viele Netzknoten 10 mit einer Abfrage zu erfassen. Die Anzahl der Netzknoten 10 im Pfad kann aber auch bewusst begrenzt werden.

Die Übermittlung der Verbrauchsdaten an den Master 12 ist in jedem Fall dank des Routings gerichtet und folgt den vom Master 12 ermittelten Pfaden, die dynamisch angepasst werden können.

Nach dem Einsammeln aller Verbrauchsdaten geht das Netzwerk wieder in seinen Grundzustand über, in dem sich alle Netzknoten 10, 12 im Wake-On-Radio-Modus (quasi-permanente Empfangsbereitschaft) befinden. Im Grundzustand kann deshalb praktisch zu jedem beliebigen Zeitpunkt auf die Netzknoten 10 zugegriffen werden. Ein Zugriff kann entweder vom Master 12 initiiert lokal erfolgen, oder über ein (öffentliches) Weitverkehrsnetz angestoßen werden. Ein Zugriff kann auch im Rahmen einer Fernwartung o. ä. erfolgen.

Grundsätzlich werden alle Netzknoten 10 im Netzwerk über ihre Produktionsnummer selektiert, d. h. eine explizite Vergabe von Netzwerk- oder Netzknotenadressen findet nicht statt.

Anstelle oder zusätzlich zu den RSSI-Werten kann die Bestimmung der Empfangsqualität der Kommunikationsverbindungen anhand von LQI-Werten erfolgen (LQI steht für Link Quality Indicator und stellt einen aus der empfangenen Energie abgeleiteten Parameter dar, der mit jedem empfangenen Datenpaket mitgeteilt wird).

Generell werden gesendete Pakete vom Empfänger bestätigt, sodass im Fehlerfall (CRC-Fehler, unbekannter Typ, Timeout, etc.) Pakete (gegebenenfalls mehrfach) wiederholt gesendet werden können.

Gemäß einer Erweiterung des Erfindungsgedankens können die Datenerfassungsgeräte in das Netzwerk miteinbezogen und wie die Datensammler als Netzknoten betrachtet werden. In diesem Fall verfügen die Datenerfassungsgeräte ebenso wie die Datensammler zusätzlich über ein Empfangsmodul und die beschriebene Wake-On-Radio-Funktionalität, sodass ein gezieltes Abfragen der Datenerfassungsgeräte "on demand" durch einen Netzknoten 10, 12 ermöglicht wird. Auf eine Zeitsteuerung kann dann ganz verzichtet werden.

Gemäß der Erweiterung registrieren die Datensammler (Netzknoten 10, 12) bei der Netzwerkkonfiguration neben den empfangbaren Nachbar-Datensammlern auch die empfangbaren Datenerfassungsgeräte mit deren Identifikationscode (Gerätenummer). Dem Master 12 werden diese Informationen mitgeteilt, sodass der Master 12 in der Lage ist, für die Abfrage der Verbrauchsdaten Pfade bis hin zu den Datenerfassungsgeräten festzulegen. Gegebenenfalls verteilt der Master 12 die Informationen über die Kommunikationsverbindungen zwischen den Datenerfassungsgeräten und den Datensammlern an die anderen Netzknoten 10 oder an das gesamte Netzwerk einschließlich der Datenerfassungsgeräte.

## Patentansprüche

1. Verfahren zur Übermittlung von Verbrauchsdaten dezentral angeordneter Datenerfassungsgeräte an wenigstens einen Master-Netzknoten (12) über ein Netzwerk von Netzknoten (10),
**dadurch gekennzeichnet, dass** die Kommunikation zwischen den Netzknoten (10, 12) beim Übermitteln der Verbrauchsdaten auf einem Wake-On-Radio-Konzept basiert, gemäß dem die Empfangseinrichtung eines Netzknotens (10) in bestimmten Zeitabständen von einem Stromsparmodus in einen Empfangsmodus wechselt, in dem die Empfangseinrichtung für eine bestimmte Zeit auf einem bestimmten Funkkanal zuhört,
wobei der Master-Netzknoten (12) Informationen über Kommunikationsverbindungen zwischen einzelnen Netzknoten (10, 12), welche auf Befehl des Master-Netzknotens (12) von den einzelnen Netzknoten (10) ermittelt werden, einholt.

2. Verfahren nach Anspruch 1, **dadurch gekennzeichnet, dass** die Netzknoten (10) in einem Primärfunkbetrieb die Verbrauchsdaten von den Datenerfassungsgeräten empfangen und in einem davon unabhängigen Sekundärfunkbetrieb die Verbrauchsdaten innerhalb des Netzwerks auf bidirektionalen Kommunikationswegen an den Master-Netzknoten (12) übermitteln, wobei sich Frequenzband, Modulationsart und/oder Datenrate im Primärfunkbetrieb und im Sekundärfunkbetrieb unterscheiden.

3. Verfahren nach Anspruch 1 oder 2, **dadurch gekennzeichnet, dass** die Verbrauchsdaten aus den Netzknoten (10) unter Verwendung vorher festgelegter Pfade zwischen den Netzknoten (10) und dem Master-Netzknoten (12) ausgelesen werden.

4. Verfahren nach Anspruch 3, **dadurch gekennzeichnet, dass** beginnend beim letzten Netzknoten (10) eines Pfades die zwischengespeicherten Verbrauchsdaten von allen Netzknoten (10), die auf dem Pfad zum Master-Netzknoten (12) liegen, an den Master-Netzknoten (12) weitergeleitet werden.

5. Verfahren nach Anspruch 4, **dadurch gekennzeichnet, dass** bei jeder Übermittlung von Verbrauchsdaten von einem Netzknoten (10) zu einem anderen Netzknoten (10) die zugehörige Pfadangabe mitversandt wird.

6. Verfahren nach Anspruch 4 oder 5, **dadurch gekennzeichnet, dass** die Pfade dynamisch angepasst werden.

7. Verfahren nach einem der vorhergehenden Ansprüche, **dadurch gekennzeichnet, dass** ein Netzknoten (10) die von einem Datenerfassungsgerät und/oder einem anderen Netzknoten (10) empfangenen Verbrauchsdaten darauf prüft, ob diese schon vorhanden sind.

8. Verfahren nach einem der vorhergehenden Ansprüche, **dadurch gekennzeichnet, dass** auch die Kommunikation zwischen den Datenerfassungsgeräten und den Netzknoten (10, 12) bei einem Übertragen der Verbrauchsdaten von den Datenerfassungsgeräten zu den Netzknoten (10, 12) auf dem Wake-On-Radio-Konzept basiert.

9. Verfahren nach einem der vorhergehenden Ansprüche, **dadurch gekennzeichnet, dass** bei der Kommunikation alle Netzknoten (10, 12) und gegebenenfalls alle Datenerfassungsgeräte im Netzwerk über einen Identifikationscode selektiert werden.

10. Vorrichtungsanordnung zur Übermittlung von Verbrauchsdaten dezentral angeordneter Datenerfassungsgeräte an einen Master-Netzknoten (12) gemäß dem Verfahren nach einem der vorhergehenden Ansprüche, umfassend mehrere Netzknoten (10, 12) mit Sende- und Empfangseinrichtungen, die so angeordnet sind, dass sich jeder Netzknoten (10, 12) wenigstens in Empfangsreichweite eines anderen Netzknotens (10, 12) befindet und sich wenigstens ein Netzknoten (10) zusätzlich in Empfangsreichweite des Master-Netzknotens (12) befindet,
**dadurch gekennzeichnet, dass** die Netzknoten (10, 12) über eine Wake-On-Radio-Funktionalität verfügen, gemäß der die Empfangseinrichtung eines Netzknotens (10) in bestimmten Zeitabständen von einem Stromsparmodus in einen Empfangsmodus wechselt, in dem die Empfangseinrichtung für eine bestimmte Zeit auf einem bestimmten Funkkanal zuhört,
wobei der Master-Netzknoten (12) dazu eingerichtet ist, Informationen über Kommunikationsverbindungen zwischen einzelnen Netzknoten (10, 12), welche auf Befehl des Master-Netzknotens (12) von den einzelnen Netzknoten (10) ermittelt werden, einzuholen.

11. Vorrichtungsanordnung nach Anspruch 10, **dadurch gekennzeichnet, dass** die Netzknoten (10, 12) in einem Primärfunkbetrieb, in dem die Verbrauchsdaten von den Datenerfassungsgeräten empfangen werden, und in einem davon unabhängigen Sekundärfunkbetrieb betreibbar sind, in dem die Verbrauchsdaten auf bidirektionalen Kommunikationswegen an den Master-Netzknoten (12) übermittelt werden, wobei sich Frequenzband, Modulationsart und/oder Datenrate im Primärfunkbetrieb und im Sekundärfunkbetrieb unterscheiden.

12. Vorrichtungsanordnung nach Anspruch 10 oder 11, **dadurch gekennzeichnet, dass** auch die Datenerfassungsgeräte als weitere Netzknoten in das Netzwerk einbezogen sind und ebenfalls über die Wake-On-Radio-Funktionalität verfügen.

13. Vorrichtungsanordnung nach einem der Ansprüche 10 bis 12, **dadurch gekennzeichnet, dass** die Netzknoten (10, 12) und gegebenenfalls die Datenerfassungsgeräte so eingerichtet sind, dass sie vor und/oder nach einer Übermittlung der Verbrauchsdaten an den Master-Netzknoten (12) in einen Wake-On-Radio-Modus wechseln.

## Claims

1. A method for transmitting consumption data of decentralized data acquisition devices to at least one master network node (12) via a network of network nodes (10),
**characterized in that** during the transmission of the consumption data the communication between the network nodes (10, 12) is based on a Wake-on-Radio concept according to which the receiving device of a network node (10) at certain time intervals switches from a power saving mode into a receive mode in which the receiving device for a certain period listens on a particular radio channel,
wherein the master network node (12) gathers information on communication connections between individual network nodes (10, 12) which by command of the master network node (12) are determined by the individual network nodes (10).

2. The method according to claim 1, **characterized in that** in a primary radio mode the network nodes (10) receive the consumption data from the data acquisition devices and in an independent secondary radio mode transmit the consumption data within the network on bidirectional communication paths to the master network node (12), wherein the frequency band, type of modulation and/or data rate are different in the primary radio mode and in the secondary radio mode.

3. The method according to claim 1 or 2, **characterized in that** the consumption data are read out from the network nodes (10) by using previously defined paths between the network nodes (10) and the master network node (12).

4. The method according to claim 3, **characterized in that** beginning with the last network node (10) of a path the temporarily stored consumption data of all network nodes (10), which lie on the path to the master network node (12), are forwarded to the master network node (12).

5. The method according to claim 4, **characterized in that** with each transmission of consumption data from one network node (10) to another network node (10) the associated pathname also is transmitted.

6. The method according to claim 4 or 5, **characterized in that** the paths are adapted dynamically.

7. The method according to any of the preceding claims, **characterized in that** a network node (10) checks the consumption data received by a data acquisition device and/or another network node (10) as to whether the same are present already.

8. The method according to any of the preceding claims, **characterized in that** during a transmission of the consumption data from the data acquisition devices to the network nodes (10, 12) the communication between the data acquisition devices and the network nodes (10, 12) also is based on the Wake-on-Radio concept.

9. The method according to any of the preceding claims, **characterized in that** during the communication all network nodes and possibly all data acquisition devices in the network are selected via an identification code.

10. An apparatus assembly for transmitting consumption data of decentralized data acquisition devices to a master network node (12) by the method according to any of the preceding claims, comprising a plurality of network nodes (10, 12) with transmitting and receiving devices which are arranged such that each network node (10, 12) at least is disposed within the reception range of another network node (10, 12) and at least one network node (10) additionally is within the reception range of the master network node (12),
**characterized in that** the network nodes (10, 12) are provided with a Wake-on-Radio functionality according to which the receiving device of a network node (10) at certain time intervals switches from a power saving mode into a receive mode in which the receiving device for a certain period listens on a particular radio channel,
wherein the master network node (12) is equipped to gather information on communication connections between individual network nodes (10, 12) which by command of the master network node (12) are determined by the individual network nodes (10).

11. The apparatus assembly according to claim 10, **characterized in that** the network nodes (10, 12) are operable in a primary radio mode, in which the consumption data are received by the data acquisition devices, and in an independent secondary radio mode in which the consumption data are transmitted to the master network node (12) on bidirectional communication paths, wherein the frequency band, type of modulation and/or data rate are different in the primary radio mode and in the secondary radio mode.

12. The apparatus assembly according to claim 10 or 11, **characterized in that** the data acquisition devices also are included in the network as further network nodes and likewise are provided with the Wake-on-Radio functionality.

13. The apparatus assembly according to any of claims 10 to 12, **characterized in that** the network nodes (10, 12) and possibly the data acquisition devices are equipped such that before and/or after a transmission of the consumption data to the master network node (12) they switch into a Wake-on-Radio mode.

## Revendications

1. Procédé de transmission de données de consommation d'appareils d'acquisition de données agencés de manière décentralisée à au moins un noeud de réseau maître (12) au moyen d'un réseau de noeuds de réseau (10),
**caractérisé en ce que** la communication entre les noeuds de réseau (10, 12) lors de la transmission des données de consommation est basée sur un concept Wake-On-Radio selon lequel le moyen de réception d'un noeud de réseau (10) passe à intervalles de temps déterminés d'un mode d'économie d'énergie à un mode de réception dans lequel le moyen de réception écoute pendant un temps déterminé sur un canal radio spécifique,
le noeud de réseau maître (12) collectant des informations concernant des liaisons de communication entre des noeuds de réseau individuels (10, 12) qui sont déterminées par les noeuds de réseau individuels (10) sur commande du noeud de réseau maître (12).

2. Procédé selon la revendication 1, **caractérisé en ce que** les noeuds de réseau (10), dans un mode radio primaire, reçoivent les données de consommation des appareils d'acquisition de données, et dans un mode radio secondaire indépendant de celui-ci, transmettent les données de consommation au sein du réseau au noeud de réseau maître (12) par des voies de communication bidirectionnelles, la bande de fréquence, le type de modulation et/ou le débit de données étant différents dans le mode radio primaire et le mode radio secondaire.

3. Procédé selon la revendication 1 ou 2, **caractérisé en ce que** les données de consommation provenant des noeuds de réseau (10) sont extraites en utilisant des chemins définis à l'avance entre les noeuds de réseau (10) et le noeud de réseau maître (12).

4. Procédé selon la revendication 3, **caractérisé en ce qu'**en commençant avec le dernier noeud de réseau (10) d'un chemin, les données de consommation stockées temporairement de l'ensemble des noeuds de réseau (10) se trouvant sur le chemin vers le noeud de réseau maître (12) sont transférées au noeud de réseau maître (12).

5. Procédé selon la revendication 4, **caractérisé en ce que** pour chaque transmission de données de consommation d'un noeud de réseau (10) à un autre noeud de réseau (10), les indications de chemin associées sont également envoyées.

6. Procédé selon la revendication 4 ou 5, **caractérisé en ce que** les chemins sont adaptés de manière dynamique.

7. Procédé selon l'une des revendications précédentes, **caractérisé en ce qu'**un noeud de réseau (10) examine les données de consommation reçues d'un appareil d'acquisition de données et/ou d'un autre noeud de réseau (10) pour déterminer si celles-ci sont déjà présentes.

8. Procédé selon l'une des revendications précédentes, **caractérisé en ce que** la communication entre les appareils d'acquisition de données et les noeuds de réseau (10, 12) lors d'une transmission des données de consommation des appareils d'acquisition de données aux noeuds de réseau (10, 12) est également basée sur le concept Wake-On-Radio.

9. Procédé selon l'une des revendications précédentes, **caractérisé en ce que** lors de la communication, tous les noeuds de réseau (10, 12) et éventuellement tous les appareils d'acquisition de données dans le réseau sont choisis par l'intermédiaire d'un code d'identification.

10. Agencement de dispositifs pour la transmission de données de consommation d'appareils d'acquisition de données agencés de manière décentralisée à un noeud de réseau maître (12) selon le procédé selon l'une des revendications précédentes, comprenant plusieurs noeuds de réseau (10, 12) qui présentent des moyens d'émission et de réception lesquels sont agencés de telle sorte que chaque noeud de réseau (10, 12) se trouve au moins dans la portée de réception d'un autre noeud de réseau (10, 12) et qu'au moins un noeud de réseau (10) se trouve en plus dans la portée de réception du noeud de réseau maître (12),
**caractérisé en ce que** les noeuds de réseau (10, 12) disposent d'une fonctionnalité Wake-On-Radio selon laquelle le moyen de réception d'un noeud de réseau (10) passe à intervalles de temps déterminés d'un mode d'économie d'énergie à un mode de réception dans lequel le moyen de réception écoute pendant un temps déterminé sur un canal radio spécifique,
le noeud de réseau maître (12) étant aménagé de manière à collecter des informations concernant des liaisons de communication entre des noeuds de réseau individuels (10, 12) qui sont déterminées par les noeuds de réseau individuels (10) sur commande du noeud de réseau maître (12).

11. Agencement de dispositifs selon la revendication 10, **caractérisé en ce que** les noeuds de réseau (10, 12) peuvent être mis en oeuvre dans un mode radio primaire dans lequel les données de consommation sont reçues par les appareils d'acquisition de données, et dans un mode radio secondaire indépendant de celui-ci dans lequel les données de consommation sont transmises au noeud de réseau maître (12) par des voies de communication bidirectionnelles, la bande de fréquence, le type de modulation et/ou le débit de données étant différents dans le mode radio primaire et le mode radio secondaire.

12. Agencement de dispositifs selon la revendication 10 ou 11, **caractérisé en ce que** les appareils d'acquisition de données sont également inclus dans le réseau en tant que noeuds de réseau additionnels et disposent aussi de la fonctionnalité Wake-On-Radio.

13. Agencement de dispositifs selon l'une des revendications 10 à 12, **caractérisé en ce que** les noeuds de réseau (10, 12) et éventuellement les appareils d'acquisition de données sont aménagés de manière à passer dans un mode Wake-On-Radio avant et/ou après une transmission de données de consommation au noeud de réseau maître (12).
